(19) Europäisches Patentamt
European Patent Office
Office européen des brevets

(11) **EP 2 628 526 A1**

(12) **EUROPEAN PATENT APPLICATION**
published in accordance with Art. 153(4) EPC

(43) Date of publication:
**21.08.2013 Bulletin 2013/34**

(21) Application number: **11780043.3**

(22) Date of filing: **13.04.2011**

(51) Int Cl.:
**B01D 53/50** (2006.01)  **B01D 53/80** (2006.01)

(86) International application number:
**PCT/CN2011/000650**

(87) International publication number:
**WO 2011/140820 (17.11.2011 Gazette 2011/46)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **11.01.2011 CN 201110004529**
**14.05.2010 CN 201010179965**

(71) Applicant: **Sun, Houjie**
**Shenzhen, Guangdong (CN)**

(72) Inventor: **Sun, Houjie**
**Shenzhen, Guangdong (CN)**

(74) Representative: **Fuchs**
**Patentanwälte**
**Westhafenplatz 1**
**60327 Frankfurt am Main (DE)**

(54) **WET FLUE GAS DESULFURIZATION ABSORPTION TOWER FOR POWER PLANT**

(57)    A wet FGD: the upper square tower fixed with pure flue gas flue and raw flue gas flue whose widths same as that of the square tower, the flue are respectively shrunk to fit pure flue and raw flue, so eradicate entirely turbulence and bias flow field of flue gas. Flue gas is following then against with spraying slurry so can eradicate the pressure loss, cancel BUF. Oxidation air and predissolved absorption slurry are directly fed into spray zone so cancel Roots blowers. Instantly accomplish desulfurization. Realize running without dirtiness, so need no demister or only a simple metal demister, and the pure flue gas passage needs no corrosion protection, the naked tower is also a bypass flue.

EP 2 628 526 A1

**Description**

FIELD OF THE INVENTION

The present invention relates to an absorption tower particular to a wet FGD for power plant.

BACKGROUND OF THE INVENTION

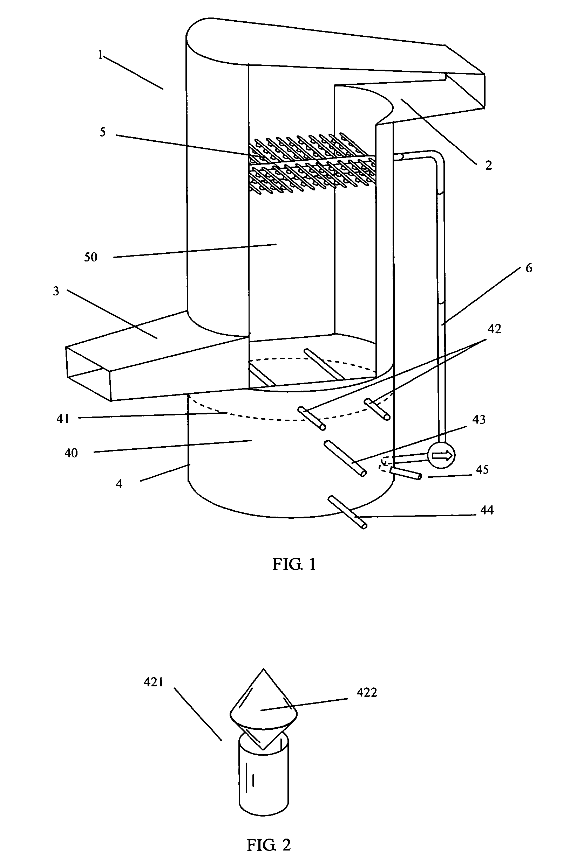

Because the distribution of liquid flow field in space always chooses the path with less resistance and less loss of pressure, so appears "short-road" phenomenon, usually the width of flue gas outlet and inlet are smaller than that of wet spraying absorption tower with cylindrical (square) body, the flue gas flow field appears turbulence and bias flow even reflux in the absorption tower inflation parts (as figure 1 showing the pared parts). Result in spraying slurry failing to meet flue gas in this zone, wasting slurry and power energy of pump, the Ca/S is rising and the desulfurization efficiency is falling. Because the flue gas kinetic pressure is less in the turbulence zone so the spraying slurry speed is faster and contain more calcium. The $CaCO_3$ easily crystallizes and deposits at the sharp corners of tower wall, the erosion of tower wall by slurry is serious (grinded limestone grains which in slurry are sharper), the tower wall are usually worn through. The $H_2SO_3$ contents is less in the slurry which in the slurry pond under the turbulence zone at the same time, and the $CaCO_3$ contents is higher, the PH value of whole slurry pond is not uniformity and the acidity value is higher within parts of zone, oxidizing degree is different and sulfite easily knot as dirtiness so that affect the efficiency of desulfurization, the agitation power needed is more. The $CaCO_3$ supplying slurry of usual wet FGD are directly putted into slurry pond (the $CaCO_3$ slurry entrance of usual tower isn't near the entrance of circulation pump), because of the relative huge slurry pond the $CaCO_3$ mole ratio is very little, additionally interfered with other impurity such as gypsum, the oxidizing rate and neutralizing rate of $H_2SO_3$ are depressed seriously.

This invention overcomes the weakness mentioned in the context, and decrease a majority of the power of BUF (boost up fan) and the agitator power of slurry pond, decreases the construction cost, instantly and efficiently absorbs $SO_2$, therefore it's easy to control with instantly following, because the tower is square, can simplify the frame design of chief spraying duct and its spray nozzles in space, lowers the fixing difficulty and the spraying is uniformity.

The main reaction are hydrolyzation and absorption of $SO_2$ while the flue gas flow against spraying slurry in usual wet FGD, most of $SO_2$ are being released to flue gas again because that can't be oxidized and neutralized in time.

$$SO_2 + H_2O \longleftrightarrow H_2SO_3 \qquad (1)$$

$$H_2SO_3 \longleftrightarrow HSO_3^- + H^+ \longleftrightarrow SO_3^{2-} + 2H^+ \qquad (2)$$

The oxygen in flue gas can also oxidizes the sulfurous acid hydrogen radical(the sulfurous acid radical) ion to the sulfuric acid radical ion, but the oxidized quantity is little(the ratio of contented oxygen is 6% in standard of design, but generally not enough 6% while running).

$$2HSO_3^- + O_2 \rightarrow 2SO_4^{2-} + 2H^+ \qquad (3)$$

Because the $CaCO_3$ concentration in the spraying slurry is little and the time for gas contacting slurry is relatively short (generally 3-4 sec.), the neutralization reaction as follows is rare and most of it carry on in the slurry pond:

$$CaCO_3 + H_2SO_3 \rightarrow CaSO_3 + CO_2 \uparrow + H_2O \qquad (4)$$

$$CaSO_3 + H^+ \longleftrightarrow Ca^{2+} + HSO_3^- \qquad (5)$$

$$CaSO_3 + HSO_3^- + H^+ \longleftrightarrow Ca(HSO_3)_2 \qquad (6)$$

$$CaCO_3 + SO_4^{2-} + 2H^+ \rightarrow CaSO_4 \cdot 2H_2O \downarrow + CO_2 \uparrow + H_2O \qquad (7)$$

The acidity of slurry is rising while slurry dropping and a little is oxidized and neutralized by $CaCO_3$, after reach equilibrium showed as expression (2) the further absorption of $SO_2$ is depressed, only waste circulation pump power, but it must last a certain time to oxidize $SO_3^2$ which drop into slurry pond into $SO_4^{2-}$, further neutralized into $CaSO_4$ in the slurry pond with lowest concentration of limestone, then crystallized into grains. The concentration and partial pressure of released $CO_2$ depressed the further dissolution of $CaCO_3$ in the slurry pond, reduce the PH value of slurry, prolonge the time of neutralization and reduce the ratio of gypsum producing, increase the time and amount of acidic remainder in slurry pond , the acidic remainder may result in a certain quantity of $CaSO_3$ and $H_2SO_3$ to resolve and release $SO_2$

again, namely the equilibrium showed as expression (1) and (5), at the same time result in the erosion of tower more seriously, the acid slurry isn't uniformity that result in not uniformity of $CaCO_3$, the PH value can not be controlled easily, and appearing various abnormal phenomenon such as excessively regulating when raising the PH value, the content of $CaCO_3$ in gypsum is more and not uniformity, wherein the slurry pond volume and it's agitating power must be designed enough large so may reduce the concentration of $CO_2$ and $O_2$ to benefit oxidizing and resolving, at the same time can reduce the false level of slurry at a certain degree; the limestone have to have an enough excess amount (generally more than designed value of Ca/S) and an enough detaining time, then can attain a certain expectation value of desulfurization rate as well as other values.

Usually for raising desulfurization rate need to increase the concentration of absorption slurry to raise PH value, that result in the efficiency of oxidizing sulfite falling, limestone become exceeding and difficult to dissolve, gypsum crystallization become more difficult, become knotting dirtiess then blocking, running cost become rising. If decrease the concentration of absorption slurry may reduce PH value but the acidic matter become more and more, the equilibrium showed as expression (1) and (5) increase forward, desulfurization rate is dropping, corrosion is more seriously.

In order to overcome the usual designed limitations mentioned in the context, the present invention adopts several projects as follows.

SUMMARY OF THE PRESENT INVENTION

The present invention provide a kind of technics and structures of wet FGD, in order to decrease the cost of construction and running and maintenance, to purify air, increase desulfurization efficiency, and accelerate economic development.

In order to carry out said purpose, the present invention provided a kind of wet FGD for power plant as follows.

A kind of technics and structures of wet FGD for power plant, its characters lie in, Above a certain height that above the slurry pond surface is the square tower, the section is square or quasi-square, below the square tower that is the cylindrical tower or other shape body which must benefit this technics performance, the raw flue and the pure flue join the square tower after be dilated at a certain ratio with the interface width same to that of square tower. A great deal of air is sent into spraying zone that goes along with flue gas, less or no air is sent into the slurry pond. The limestone absorption slurry gets into slurry circulation ducts and slurry pond separately or entirely gets into slurry circulation ducts, the desulfurization reactions accomplish instantly. Especially in condition of single oxidizing zone can realize the pure flue gas is alkalescence and without dirtiness of acid mist and sulfite, so the usual demister is canceled. For lowering the consumption of water should fix a simple metal demister, additionally because the excess oxidation air oxidize after, the pure flue gas passage needs no corrosion protection, the absorption tower is also a bypass flue by covered with a layer of antiseptic material which can bear higher temperature inside tower, thereby the bypass flue together with its dampers and the FGD inlet and outlet dampers all can be canceled, the power of BUF can be reduced about 50% or canceled it. In a higher temperature environment, the equipment such as flue and absorption tower should adopt the particular methods of heat dissipating to improve the performance of FGD.

Form multiple oxidizing zones in the absorption tower: comprise the absorption oxidizing zone namely spray zone and the slurry pond oxidizing zone, the oxidation air tubes of countercurrent absorption oxidation zone locate at the position about 1-2m height above the slurry pond surface and below the flue gas inlet. The oxidation air tubes of downstream absorption oxidation zone are arranged alternately with the chief spraying ducts. The Spraying zone can be fed into a great deal of air with centrifugal fans or only natural wind which utilize the negative pressure inside the tower, the flow of air is more than about 120% of design air flow in the usual wet-FGD project. The oxidation air tubes of slurry pond are located at the position under the slurry surface and its height is higher than that of usual technics, about 1/4 amount of air is distributed in this zone to oxidize the acidic remainder, reduce a majority of Roots blowers power. The absorption tower form single oxidation zone when the flow of air feed into absorption oxidation zone more than 150% of design air flow which in the usual wet-FGD, and cancel the slurry pond oxidation zone.

Within the countercurrent spray zone, the nozzles which open outlet upwards locate on the top of the oxidation air tubes, above the nozzle fix a pair of cones 422 which are bottom facing bottom each other, the diameter of its bottoms are about 4/3 of the inside diameter of nozzle, outside the nether oxidation air tubes fix some drain valves or some drain pipes which insert into slurry a certain depth.

Divide said supplying $CaCO_3$ slurry pipe into several branches then join the slurry pond, each branch inlet is nearer to each inlet of matched circulation pump, each flow of $CaCO_3$ supplying slurry branch matches each flow of circulation pump; or make the branches which join the slurry pond and join the circulation pump independently each other, and control each branch independently; Or only set the $CaCO_3$ supplying slurry pipes which join the inlet of circulation pump. Limestone absorption slurry should be predissolved; Increase the slurry circulation flow comparing with the background technics; All the spraying duct layers can be installed on the top of inside tower even if the simple metal demister is already installed; Show and control the PH value of spraying slurry and slurry of slurry pond with particular project; Reduce the volume and agitating power of slurry pond corresponsively.

The chemical reactions of absorbing and neutralizing and oxidizing accomplish instantly, so the flue gas velocity can be designed about 5-6m/s even faster, the contact time of gas against slurry can be designed as about 1 second, and can lower the tower height to about 25m according to the present invention.

For downstream absorption tower, or the countercurrent absorption tower in a particular condition such as integrating with stack, and adopt the methods of reducing flue gas velocity, reducing the spraying flow, the BUF can be canceled.

Inside the following-against tower or the against-following tower, form the downstream power oxidation zone (70) and the countercurrent power oxidation zone (80), the distributed flow of oxidation air and spraying slurry which into the 70 zone are more than which into the 80 zone and maintained at a same ratio, and should make the initial velocity of spraying slurry in 70 zone faster than the flue gas velocity in the tower and also faster than the initial velocity of spraying slurry in 80 zone; Only form the downstream power oxidation zone Inside the downstream tower, cancel the usual demister ,Can realize the 0 breakthrough of pressure loss without the usual demister inside tower, so cancel the BUF. In order to optimize the performance of tower running without dirtiness, should send additional excess oxidation air into 80 zone and raise the spraying slurry PH value in this zone.

This technics system resolve the response delay such as supplying slurry bottleneck, accomplish desulfurization reaction instantly. Realize the "0" breakthrough of the system response, bring forward the simplest single loop PID control strategy; bring forward a optimized control strategy for the background technology technics through analyzing the response delay such as supplying slurry bottleneck of the background technology technics.

Through analyzing the parameters of optimized preparing slurry system with wet ball mill for resolving said coupling relationship, bring forward a solution of quasi-single loop PID control strategy for preparing slurry system with the clear relationship of parameters. So that can benefit the implementation of said examples of this invention.

Said each example for the absorption tower in the present invention can be simply integrated with stack into the desulfurization stack.

The technics and the structures and the control strategies or the detail of them, can be applied to others such as the wet-FGD technics of the filler tower, the liquid column tower, the bubbling tower etc., can also be applied to the wet-FGD with other absorbent such as the double alkali method, the ammonia method, the sodium alkali method and the sea water method, the magnesia method etc.

This invention has the following benefit: The present invention provide a kind of technics and structures of wet FGD, the typical example is the tower of upper cube and nether cylinder, and the simple fluent shape eradicated entirely the turbulence and bias flow even reflux of flue gas. optimize the method of supplying slurry, Oxidation air and predissolved absorption slurry are directly fed into spray zone, cancel the roots blowers and only use centrifugal fans or natural wind, the pure flue gas is alkalescence so its passage need no corrosion protection. Cancel the usual demister or only installed the simple metal demister. At the same time the bypass flue together with its dampers and the FGD inlet and outlet dampers all that are canceled, the absorption tower is also a bypass flue by covered with a layer of antiseptic material which can bear higher temperature inside tower, so the power of BUF can be reduced more than about 50%. Through change the countercurrent spraying to against-following current spraying or following-against current spraying or downstream spraying overcome the pressure loss of flue gas so the BUF is canceled. The PH value of slurry pond can be controlled at any expected value. Entirely prevented corrosion, maximally improve the quality of gypsum. Lower the tower height to about 25m, and reduce the volume of slurry pond together with its agitation power, the flue gas velocity can be designed about 5-6m/s even higher, instantly absorption(1s), efficiently desulfurization(99%), 0s delay time, maximally reduce the value of Ca/S and the consumption of power. Control only with single loop PID without feedforward. Particularly each example of the present invention can be simply integrated into the flue gas desulfurization stack (GDS). Most brief only a stack! As well as Improve the technics of the preparing absorption slurry system, realize control with the quasi-single loop PID.

The naked tower (this invention) can reduce the cost to about 10%, the power consumption ratio of power plant can be reduced about 1.25%, saving power energy about 30,000,000 kw/h and saving about 10,000 tons coal one year.

For further understanding the characteristics and technics and strategies of this invention, please read the explanation and attached figures as follows, however attached figure only provides reference and elucidation, do not used to limit the invention.

BRIEF DESCRIPTION OF THE DRAWINGS

The invention is described in more detail below on the basis of the examples with reference to the accompanying drawings.

In the drawings,

FIG. 1 shows a diagram of a perspective view of one example of the present invention;
FIG 2 shows a diagram of a detailed side view of the oxidation air nozzle which sited on the oxidation air tube in the countercurrent spraying zone;

FIG. 3 shows a diagram of a perspective view of another example of the present invention;

FIG. 4 shows a diagram of a plan of the naked tower (desulfurization flue) for FIG. 3;

FIG. 5 shows a diagram of the running curve sketch map of the background wet-FGD;

FIG. 6 shows a diagram of a coupling relationship of parameters of the preparing limestone system;

## DESCRIPTION OF THE PREFERRED EMBODIMENTS

Herein give a detailed description for the present invention assisted with attached figures as follows.

In FIGS. 1 and 2, there is a sample for this invention, the absorption tower has the spray layers on the top of inside tower and fed the spraying slurry by circulation pump, absorb with countercurrent flow, has the body of upper cube and nether cylinder, comprise Square tower 1 which section is square or quasi- square, located above the bottom of flue gas inlet, the pure flue gas outlet flue 2 and the raw flue gas inlet flue 3 are located outside of the square tower, under the square tower 1 is cylindrical tower 4(cylinder, or other shape body which must benefit the desulfurization performance), the slurry pond oxidizing zone 40 are formed in the upper pond and within it, the nether pond and within it is crystallizing zone(under the 40 zone). The spraying zone 50 is inside the square tower 1 namely absorption oxidation zone, for increasing the flux of circulation, can set 4 inside the square tower, the height of alternation of spray layers 5 can be 1.5 m.

In this example, the pure flue gas outlet is located on the top of a side of square tower 1, its width is equal to that of the square tower 1 and its section is square or trapezoid. the pure flue gas outlet flue 2 have a square or trapezoid section and shrunk to fit the pure flue at a certain reduction ratio, The two edges of the tower top expand at a certain or said ratio to another side, or set as the body of square tower that with two parallel edges. The raw flue gas inlet locate on the underside of same side or opposite side (the opposite is priority), and its width is equal to that of the square tower 1, the raw flue gas inlet flue 3 shrunk to fit raw flue at a certain reduction ratio. This structure can eradicate entirely the turbulence and bias flow even reflux of flue gas in tower. The flue gas flow field is uniformity, efficiently utilize limestone, the value of Ca/S is less, efficiently absorption, the erosion of tower wall by the slurry is less, the PH value of slurry pond is uniformity and easily to control, have no invalidation of limestone etc.

The absorption tower comprises the absorption oxidizing zone namely the spraying zone and the slurry pond oxidizing zone. within the absorption oxidizing zone (the spraying zone) Several oxidation air tubes 42 locates at a suitable height (about 1-2 meters) above the slurry pond surface 41 and below the flue gas inlet flue 3; within the slurry pond oxidizing zone Several oxidation air tubes 43 locates at the upper slurry pond and below the slurry pond surface 41, form single oxidation zone when the slurry pond oxidation zone is canceled. To prevent the spray slurry from infusing into the oxidation air tubes 42 and the oxidation fan, some nozzle 421 which open outlet upwards are fixed on the upside of oxidation air tube 42, a pair of cones 422 which are bottom facing bottom each other are fixed above the nozzle, the bottom diameter of cone is 1/3 more than the inside diameter of nozzle, the angle size of nether cone should make the oxidation air flow field of all nozzles uniformly, the angle size of upper cone should prevent the spraying slurry from infusing into nozzles of itself and others,

The gypsum drain pipe 44 are oppositely fixed , the supplying absorption slurry inlet 45 border upon the inlet of circulation pump to ensure most or all of the absorption slurry directly getting into the chief circulation duct.

**The supplying limestone pipe and absorption & neutralization:**

Said the sum of supplying $CaCO_3$ (limestone) pipes are equal to that of circulation pump, the distance that every inlet edge away from the nearest circulation pump inlet edge is about 500 mm, the exact value should ensure that most of the $CaCO_3$ absorption slurry get into the matched chief circulation duct and ensure the limestone concentration of spraying slurry uniformly. Most of the $CaCO_3$ absorption slurry can be sucked into circulation pump by utilizing the flow field of the circulation pump inlet, by the violent agitating of the circulation pump blades the circulation slurry become uniformity, then mostly increase the contact probability of $Ca^{2+}$ and $CO_3^{2-}$ of slurry film against $SO_2$ of flue gas, so that the neutralization reaction can achieve instantly, the less of absorption slurry that enter the slurry pond further neutralize the acidic remainder with the agitating of the slurry. For multiple oxidizing zone, the PH value of upper slurry pond can be controlled within a range of being advantageous to oxidization; Because the position that the supplying slurry enter locate at the nether tower, the PH value of nether slurry pond can be controlled within a range of being advantageous to gypsum crystallization and can depress the corrosion of tower bottom (generally the best value is considered as 5.5 by experience)

For single oxidizing zone, it is mustn't to hold slurry acidic in slurry pond, the slurry PH value can be virtually controlled at any expectation value, entirely depress the corrosion of tower bottom, obtain the high-quality gypsum and the lowest-value of Ca/S.

Every reaction of the bubbling tower carry out in the acid slurry; But the PH value of usual spraying absorption tower can't be held at a best value because of excessively controlling and various burden and various circulation flux, so that result in all kinds of defection, the existing illogicality with desulfurization efficiency can't be solved, gets fish but lose paw of bear.

For improving control, Divide said supplying $CaCO_3$ slurry pipe into several branches and separately join the slurry pond and each inlet of circulation pump, control the flux of each branch independently by regulating valve to ensure that spraying was uniformity (fix flow meter to assist control when necessary) and a suitable PH value of slurry pond.

The absorption amount of $SO_2$ is decided by the slurry acidity, the slurry PH value of absorption limitation is between 4 and 6, because in this technics the released $CO_2$ directly get into flue gas but not slurry pond while limestone dissolving, and the reaction of absorption and oxidization and neutralization etc. are separated with gypsum crystallization (almost all carry on in the slurry pond) in space, and are synchronous on time, and they are instant so the process-products are existing in a little time even do not exist, so the absorption reaction can not be reversed, and that the limitation of absorption are expanded, the spraying slurry PH value is falling while spraying slurry dropping, so can regulate the initial spraying slurry PH value to about 6 even far above 6 to maximize absorption amount in the whole travel of spraying. But due to oxidizing air directly get into the spraying zone, even that all of sulfite are oxidized in the spraying zone, so under the premise of ensuring the desulfurization efficiency, there is necessary to maintain the spraying slurry acidic (same as the following example) in its nether travel (or the end of its travel), particularly in the single oxidizing zone. Fix some trays to lead the spraying slurry of the end of its travel outside the tower and measure its PH value for showing, and with this value to control the flux of supplying limestone slurry, the exact value should take the principle that the pure flue gas is alkalescence and not contain dirtiness such as sulfite.

Because the PH value is higher in the part of spraying travel, the whole travel is shorter relatively, the oxidization time is little relatively, so the oxidizing air should be as much as possible. The best flow of oxidizing air mentioned in this invention should be confirmed according to corresponding technics (other best values mentioned in this invention should be confirmed in the practice).

For special example can lead the supplying limestone slurry entirely to the spraying zone thereby regulate the PH value of slurry pond, but the slurry of slurry pond must be acidic, otherwise the oxidizing effect isn't entire and easily knot as dirtiness, after getting into circulation will affect absorption, waste limestone, depress the quality of gypsum, the pure flue gas will contain sulfite. In this invention because the reaction of absorption and oxidization and neutralization etc. carry on simultaneously, and the oxidizations air is cheaper, so can forcedly oxidize the sulfite within alkalescence (or tiny alkaline or tiny acidic) environments with great excess air flow, can obtain a better effect of pure flue gas of alkalescence and the PH value of slurry pond can be controlled at a expectation value.

So, in the example of leading the supplying limestone slurry separately into circulation duct and slurry pond can appropriately increase the flow of supplying limestone slurry that get into the chief circulation duct and decrease the flow of supplying limestone slurry that get into the slurry pond.

Predissolving project:

For improving the activity of $CaCO_3$ in the absorption slurry, make it mostly dissolve within its limitation and dissolve entirely at the end of spraying travel, entirely absorb, accelerate absorption to make each reaction accomplishment thoroughly, this invention increased the flux of circulation(the power almost mustn't be increased because of the considerably falling of pressure head). The increased L/G can increase the contact probability of gas against slurry, additionally great excess oxidation air and absorption slurry are directly fed into the spray zone, will make absorption entirely and efficiently, and will be helpful for each reaction but do not uselessness. At the same time adopt the predissolving project: to reduce the density of limestone slurry to 1.10 g/cm3 or so, namely prepare fully dissolved and enough limestone slurry (can utilize the waste water which from the dehydrating gypsum system to control water equilibrium, and limestone slurry tank and its site can be easily assembled and programmed). Improve the limestone grain size to about 350 mesh (only need to reduce the top flow pressure of hydroclone) to accelerate dissolving, increase the volume of predissolved slurry, then Improve the effective component of the spraying slurry and entirely dissolve the remained limestone, so can accelerate each reaction such as neutralization etc. to accomplish instantly.

Reaction principle:

The increasing of acidity of the spraying slurry in its travel and the instant release of $CO_2$ wherein make the super saturation slurry of $CaCO_3$ dissolving rapidly, if the supplied limestone according to a certain proportion still not dissolve at the end of travel wherein the acidity of spraying slurry will be increasing, but the increased acidity will help the dissolution of $CaCO_3$ ,this dynamic equilibrium will help absorption and dissolution more entirely, therefore the slurry of circulation pump outlet can maintain the $CaCO_3$ slurry in super saturation status, the expected PH value can be far beyond 6. Because the join of excess oxidizing air and the violent agitating of gas against slurry wherein each reaction can accomplish instantly, particularly the higher PH value appears at the upper travel, but the creating and oxidizing of the sulfite occurred at the nether travel, a great excess amount of oxidizing air make the oxidization instantly and entirely, the higher PH value of absorption slurry can't affect the oxidization of sulfite. So the higher PH value of circulation slurry only brings benefits to absorption.

**Multiple oxidizing zones:**

Structures and equipments:

Said multiple oxidizing zones inside the tower comprise the slurry pond oxidizing zone and the absorption oxidizing zone(spray zone), the oxidation air tubes of the former locate above the middle position of the slurry pond and within it, the slurry pond oxidization zone is smaller than that of usual spraying absorption tower(the height of slurry pond in this technics is lower than the usual), its size decided by the amount of acidic remainder, the oxidization air are mostly distributed into the spray zone with uniformity air flow field to help oxidization. The air amount of the slurry pond oxidizing zone is less than 1/4 of total amount of air of design (decided by the amount of acidic remainder), said total amount of air of design is that already be calculated according to the desulfurization burden of the usual spraying absorption tower, the power of roots blower is only 1/4 of the usual tower.

The absorption oxidizing zone also is spray zone, the oxidation air tubes locate under the square tower and about 1-2m height above the slurry pond surface, the position is requested to be low as far as possible but must avoid to be splashed or drowned. Ensure that arrangement of air tubes and nozzles are uniformity, the nozzles open outlet upwards, Because the air are getting into the spraying zone which with negative pressure but not the slurry pond of usual tower, additionally the violent agitating of gas against slurry, for obtaining a uniformity air flow field the needed nozzles are indeed less than that of slurry pond, so can be easily fixed (the air nozzles of the usual spraying tower must be fixed intensively to obtain a uniformity air flow field in the slurry pond, to shorten the oxidization time and to decrease the power of agitation, particularly that of the bubbling tower are more complex wherein result in the inconvenience of maintaining). the air amount is more than 120% of total amount of air of design, because of absorption tower normally running with negative pressure, do not have the pressure loss of the air created by the slurry pressure of the slurry pond, so the air can get into the spray zone with higher kinetic pressure even without the running of fan, thereby can only design centrifugal fan with more flux and almost no need for pressure head, may turn off the centrifugal fan at the normal running condition(negative pressure in the tower); or do not fix any fan and only utilize negative pressure in the tower to suck in the oxidization air(or for the safety can fix a few centrifugal fan for standby), do not need the water for reducing temperature and its instruments and valves etc., the centrifugal fans can be fixed on the flat of absorption tower as its little weight, so that can save land. And not need to quite take care of the great excess flux of air so that the sulfite can be oxidized as entire as possible and the kinetic pressure of flue gas can be increased at the same time.

Nozzle and draining dirtiness:

To prevent the spraying slurry from infusing into oxidation air tubes and oxidation fans, the nozzles are designed as fig. 2, a pair of cones are fixed above the nozzle, the bottom diameter of cones is 1/3 more than the inside diameter of nozzle, the angle size of nether cone should make the oxidation air flow field of all nozzles uniformity, the angle size of upper cone should prevent the spraying slurry from infusing into nozzle of itself and others. The height of centrifugal fans should be higher than the height of oxidization air pipes which should be the lowest in the oxidization air system, some drain valves are arranged outside the nether oxidation air tubes, or some draining pipes which insert into slurry a certain depth are joined to the oxidation air tubes, the depth should ensure no leak of air or little leak of air when running normally.

Reaction principle:

Because of square tower structures the flue gas have no turbulence and bias flow field, Increased the circulating flow, most or all of the absorption slurry directly get into to spray zone so that the effective component of slurry are considerably improved, as the violent contact of gas against slurry, instantly oxidizing synchronously, wherein the effect are similar to that of efficiently raising L/G significantly, at the first time neutralize the $H^+$ in absorption slurry, the falling of PH value accelerate the dissolving of $CaCO_3$, the expression (2) increase forward wherein enhance the increasing of expression (1) forward, at the same time because oxidization by a great quantity of air the $SO_3^{2-}$ almost do not have been existing, and then accelerate the expressions (1) and (2) and (3) to increase forward, in practice they are expressions with not backwards herein significantly increase the absorption ratio which almost reach the limitation of absorption, depress the decomposing then escaping of $SO_2$ because the acidity is increasing while spraying slurry dropping, the efficiency and speed of dissolving also reach its limitation, reduce the Ca/S to its max limitation (efficiently utilizing limestone), accelerate neutralizing reaction then accelerate the born velocity of sulfurous acid root ,(4) and(5) and (6) are being accelerated forwards and can accomplish instantly. A great deal of water film was created then broken up for the violent agitation of gas against slurry, so almost all of released $CO_2$ get into flue gas instantly, release the $CO_2$ in spraying slurry to depress the dissolving of $CaCO_3$, as well as release the less dissolving amount of $CaCO_3$ in the slurry pond to depress the following dissolving, the expression (8) as following is a single forwards function but not a dynamic equilibrium function of the usual technics, can accelerate each helpful reaction. This performance is super than the bubbling tower ($CaCO_3$ dissolve in the bubbling pond).

$CaCO_3$ dissolving and neutralizing expression:

$$CaCO_3 + 2H^+ \rightarrow Ca^{2+} + CO_2\uparrow + H_2O \qquad (8)$$

Great excess oxidizing air get into flue gas against the spraying slurry, instantly neutralizing and the falling of PH value that force the oxidization to accomplish instantly, wherein ensure the least of $SO_3^{2-}$ even did not exist, particularly less or no flue gas at the end of spraying travel near the oxidizing air tube and the acidity is no longer increasing, but encounter a great deal of rich oxygen air so that the $SO_3^{2-}$ are almost all oxidized into $SO_4^{2-}$, enhance the expressions of absorption (1) and (2) to increase forwards. The $SO_4^{2-}$ with the excess $Ca^{2+}$ is born into the insoluble $CaSO_4$ in time (tiny soluble, the solubility is rising with the rising of PH value) then crystallize.

The quickly decreasing of $Ca^{2+}$ ions promotes the dissolving, then the dissolving promotes the absorbing, at this time the violent agitation of gas and the getting in of great excess oxidizing air so that the effect of agitation is very good, and increased the contact probability of those ions, accelerate each helpful reaction for desulfurization.

Because all kinds of the beneficial factors mentioned above helped the absorption of $SO_2$ and the dissolution of $CaCO_3$, the expressions (1) and (2) can be directly be rewrote with only forwards direction, for the neutralizing and oxidizing in time so the $CaCO_3$ in the expressions (4) and (5) almost do not exists in practice, and that the entirely oxidization of sulfites so the evaporate dirtiness in the spraying travel only contain sulfate such as $CaSO_4$ etc. and its crystallization grains.

**Single oxidization zone:**

After increase the oxidization air amount to above 150% of total amount of air of design in absorbing oxidization zone (spray zone), the slurry pond oxidizing zone can be canceled, then canceled the roots blowers, all the reactions are changed to spray area, the slurry pond become only a gypsum crystallizing zone, the excess oxidizing air and speedy flue gas agitated violently by the spraying slurry, a great deal of water film are born, efficiently absorb, instantly accomplish oxidization, and accelerate others reaction then replace the agitating of pulse suspending system of usual spray tower to accelerate various desulfurization reactions.

In this invention, the increment of circulation flow, the significant increment of limestone concentration in the spraying slurry, the entrance of a great deal of air, the $CaCO_3$ absorbing slurry can efficiently contact with the flue gas, efficiently utilized the slurry film, break through the L/G limitation of the usual absorbing tower, particularly suited to inferior coal contained great sulfur. The speedy flue gas resulte in violent agitation, the spraying slurry fall to tiny pieces so enlarge the area of slurry film, the violent agitation of gas against slurry increase the kinetic energy of reacting ions and the probability of conflicting and reacting, wherein benefit absorption. The metallogeny proved: The birth of the mineral field decided by the speed of the cooling and crystallizing of the magma underground and relative velocity of the crystallized rock opposite the magma flow, said the dynamic density of ions. Because this technics significantly raise the efficiency of film absorption, so can shorten the contact time of gas against slurry namely the spraying travel; then can raise the velocity of flue gas, decrease the section area of spraying zone again to cooperate with the decrement of the slurry pond diameter(volume).

For enlarging effective area of slurry film and strengthening the conflicting violence of gas against slurry so that each reacting ions can fully touch and thoroughly react each other, in the example of present invention the lowest velocity of flue gas is designed as 5-6 m/s. this zone integrated the absorption of $SO_2$ with the oxidization of $SO_3^{2-}$ and with the neutralization of H+ into one body, the flue gas agitated the spraying slurry on large area and the reactions accomplish instantly, so the contact time of gas against slurry is designed as 1 second. Thereout can own both fish and bear, can earn both righteousness and benefit, which expected for a long period, and the success only be short of east wind.

In this example the chicken and the dog both rise a sky(oxidizing air and absorbing slurry directly get into spray zone), it's more similar to the technics and reactions principle of the bubbling tower, its performance mostly approach the bubbling tower, can match it shoulder to shoulder. But the difference from the bubbling tower is that only gypsum crystallization carry on in the slurry pond (or with less neutralization), but absorption, oxidization, neutralization, the dissolution of $CaCO_3$ and the releasing of $CO_2$ all carry on within the spraying zone, this unification of spirit together with the gathering or scattering of physical process herein the form is scattered but the concept isn't scattered, that just are the pride of upper cube and nether cylinder tower. The bubbling tower has the performance as follows: the bubbling desulfurization time is 0.5s, the desulfurization rate is 98%, the utility ratio of $CaCO_3$ is 99%, and the rate of catching dust is 90%. For the empty tower (upper cube and nether cylinder tower) the expected efficiency of desulfurization is more than 99%, the expected utilization efficiency of $CaCO_3$ and catching dust rate approach or exceed that of bubbling tower. It doesn't only a dream any more that the cheapest cost of constructing and running and maintaining combines with the high efficiency of desulfurization.

For the existence of the turbulence and detainment flow field of flue gas in usual absorbing tower, in this invention the increment of flue gas flow can't result in the flue gas bringing more water fog and dirtiness. And a great deal of air which getting into spraying zone cool the spraying slurry and decrease the amount of water fog and the amount of gypsum steam etc.. with the boiler is designed as perfect as daily, the energy is utilized as reasonable and efficiency as daily, the decrement of temperature of flue gas exhausted by the boiler will be going on, currently the temperature of flue gas exhausted by the boiler of 600 MW power plant is about 127 □, when be declined to 800 or so, the spraying slurry temperature is easily maintained at 40□ or so, wherein mostly helpful for desulfurization, the phenomena that the pure flue gas containing dirtiness such as gypsum will be exterminated more entirely.

**The slurry pond:**

Because the ions are easily touch each other in the turbulence liquid , the ions on the bulges of tower wall and duct wall can touch more same ions so that can accelerate its crystallizing , hereby the tower under the bottom of the flue gas inlet are still designed as cylinder to reduce the quantity of scraggly sharp angles, such as figure 1, namely to prevent the ions from quickly crystallizing on tower wall within speedy flow, and to prevent the erosion of tower, at the same time can almost eradicate the spray slurry eroding the tower wall(the cylinder above slurry surface)which under the turbulence zone, and can prevent the crystallizing of $CaCO_3$; because the flue gas flow field is uniformity and its velocity is higher, the phenomenon of erosion of tower wall at two side are weakened effectively.

In the project of single Oxidizing zone, only carry on the gypsum crystallizing(or with less neutralization), wherein become simple, draining gypsum in time to reduce the slurry density and to benefit absorbing and oxidizing and neutralizing, to increase the efficiency of desulfurization (as the development of modem technology need not to worry about the difficulty of gypsum dehydration for tiny grains), this can reduce the burdens and abrasion of circulating pump and pulse pump etc., can decrease the degree of crystallization on tower wall and the probability of the duct being blocked.

The remained task is to mostly reduce the volume of slurry pond and lower the slurry level of slurry pond, the expected slurry level is about 5m (the slurry level of slurry pond is about 9-10m in the usual spraying FGD of 600 MW power plant). As the separation of reaction and the decrement of slurry amount so can significantly reduce the power of agitation.

Within the project of multiple oxidizing zone, after the spray slurry drop into slurry pond, still have less of Ca$(HSO_3)_2$ need to be oxidized into $CaSO_4$ and to crystallize, almost entirely save the time of neutralizing and oxidizing and crystallizing, consumedly shorten the desulfurization period of absorption and neutralization and oxidization and crystallization etc.. Oxidizing zone locate upper slurry pond and within it, in this zone oxidize the remained sulfite in time to prevent from knotting dirt, and to increase the absorption efficiency of $SO_2$ and gypsum quality. This zone need to be more violently agitated, can fix an independent pulse pipe to enhance oxidizing. The slurry in the slurry pond do not create $CO_2$, and need not a great deal of air to get into(or need less of air), therefore there is almost no deceitful slurry level, the reduction of gas made the touch of ions more sufficiently, and made oxidizing and gypsum crystallizing more efficiently ; because of the only reaction of gypsum crystallizing in the gypsum crystallizing zone(below slurry pond oxidizing zone),therefore can reduce the agitating power of the pulse suspending system , i.e. the power of pulse pump, herein should aim to agitate uniformly and not to deposit and to crystallize easily for gypsum.

In order to effectively utilize the kinetic energy of pulse slurry, lessen the pressure loss, prevent sparging slurry to erode tower bottom, the pulse pipe need to incline towards the center of slurry pond about 5°-10° opposite the vertical direction, the distribution of the pulse pipe outlet need to avoid nearing the gypsum draining outlet, made the main current of slurry mostly rolled under the square tower, the slurry that contain more $CaCO_3$ firstly neutralize with the acid slurry which just drop into the oxidizing zone, so can accelerate the creation of $CaSO_4$ and the crystallization of gypsum, herein to be rolled into the high density zones of gypsum which locate under the two outside of flue gas flue within gypsum crystallizing zone then to be drained. One gypsum draining pump is separately fixed outside of one high density zone of gypsum, the gypsum slurry is drained out from these zone such as figure 1 showing. The gypsum draining pump run alternately according to the gypsum yield, such as 24 hours alternate work system, intermittent period can be utilized to maintain.

The great deal of $CO_2$ created by neutralizing in the usual spraying absorption tower can not get into flue gas in time because of the dissolving and depressing by the pressure of slurry, as the depressing by the slurry produces the loss of kinetic pressure of $CO_2$, bring the more power consumption of BUF. In the present invention decreased the power consumption of BUF because the neutralization is achieved entirely within the spraying zone.

**Empty tower (bypass flue):**

More sulfite (the solubility is speedily falling while the PH value rising) are created in the travel of spraying in the usual spraying absorption tower, can not be oxidized and crystallized in time, the pure flue gas contained more of acid fog and sulfite steam; the contact time is longer, the spraying flow is relatively less, a great deal of gypsum immediately evaporated. Must design the demister to get rid of water fog and dirtiness to protect the after equipments against decaying and knotting dirt of sulfite and gypsum etc. the running experience proved: the phenomenon of decaying the after equipments is still very seriously even if has been done a project of corrosion protection.

In this invention the value of L/G is significantly increased, the flow increment of low temperature medium, the increasing degree of spraying slurry temperature will be depressed (but as the increment of hot material amount the temperature of the slurry in the slurry pond will be up). The amount increment of water fog is decided by the L/G and the contact time of gas against slurry, while the value of L/G is less the spraying slurry will be evaporated entirely but the total amount of vapour mustn't be very large, while the value of L/G is larger because the temperature increment of slurry is less, the total amount of vapour is less, this function have a extremum of the total amount of vapour, therefore the choice for L/G should give attention to the less of the temperature increment of spraying slurry namely slurry film, and the less of total amount of vapour, so that the dirtiness brought by water steam is tiny, in this example the choice for L/G should be as larger as possible so that mostly lessens the total amount of vapour of spraying slurry and the increment of temperature and the dirtiness brought by water fog. At the same time the consumedly shortening of the contact time of gas against slurry that significantly decrease the increment of temperature, and the great deal of cool air directly get into to spraying zone first, wherein have a cooling function to the film of increasing temperature on the against travel, appropriately increase the amount of oxidizing air to suppress the occurrence of water fog and the dirtiness such as gypsum and limestone etc. brought by water fog.

But the continually going forward of flue gas flow combined with the closed circulation of slurry herein will cause the temperature continually increasing, if do not have the method of dissipating heat the temperature finally will reach that of flue gas, the slurry temperature is only the dynamic equilibrium of absorbing heat and dissipating heat ,that decided by the rate of absorbing heat and dissipating heat of the slurry, so must strengthen dissipating heat at the same time to realize the aim of high efficient desulfurization with low temperature.

The method of dissipating heat:

The flue gas flue do not need heat preservation from the outlet of air preheater to the inlet of absorption tower, the pure flue gas passage need heat preservation to raise the pure flue gas temperature as far as possible and to enhance the "sucking power" of stack. The absorbing tower and the circulating duct should be fixed the heat-dissipating slices etc. the nether cylindrical tower can be set several ventiducts with fan through the slurry pond for heat dissipating, at the same time have the function of strengthening agitation, and accelerating oxidization and neutralization and crystallization of gypsum, can replace the function of the oxidization subarea ducts which be fixed alternately with the oxidizing air pipes in the background technique. The cylindrical tower can be adopted others shape and volume which must be benefit for dissipating heat further. The absorbing tower and liquid ducts must be protected for heat in the freezing area, and the ventiduct run in summer close in winter.

corrosion protection for pure flue gas passage:

In this invention the excess absorbing slurry and excess air are fed into the spraying slurry, the absorption and oxidization and neutralization etc. accomplish instantly in once times, its chemistry progress principle are the same as the bubbling tower, almost have no COD etc. created by vice-reaction, don't produce vapour of sulfite such as $CaSO_3$ etc.. Particularly the sulfite and gypsum are primarily created in the nether spraying travel, the sulfite is uprooted instantly even did not exists. Because a great deal of slurry conflict with the speedy flue gas that result in a great deal of slurry film and turbulence flow, the gypsum vapour together with the dust of flue gas are flushed to cleanness by the alkali slurry of limestone in the upper travel, can not arrive the top of spraying travel then be exhausted out, additionally low temperature and draining gypsum in time, and the solubility of $CaSO_4$ is falling with the falling of slurry acidity, so the pure flue gas almost has no gypsum hard dirt. The slurry on the top of spraying travel is with very high PH value so the pure flue gas contained no acid fog. And with the oxidizing by excess air after, the empty tower is really running without dirtiness and corrosion, the after pure flue gas passage needs no corrosion protection.

cancel demister(empty tower):

Particularly for the absorption tower with single oxidizing zone, oxidization is entirely in the spaying zone, thoroughly exterminate the possibility that the pure flue gas bring the erodent dirt such as sulfite and acid fog etc.,

therefore this example cancel the demister together with its assistant equipments such as flushing water etc., wherein reduce the pressure loss of flue gas(generally the pressure loss of flue gas is about 300 Pa-800 Pa of 600 MW power plant when normally running), the power of the BUF has been lowered , become a real empty tower (for the absorption tower with multiple oxidizing, don't suggest to cancel the demister). Fix a drain pipe at the lowest position of the pure flue gas passage to drain the condensed water and dirtiness and to reclaim alkalescence slurry. In the existing usual technique of plastic demister the highest running temperature can not exceed more than 100□, therefore the flue gas can not get through the usual absorption tower when the FGD was not running, i.e. the usual tower can not be run as a bypass flue. This example cancel the demister, The flue gas can get through the absorption tower up to stack at anytime by covered with a layer of antiseptic material inside the tower which can bear a higher temperature, even if do not run the spraying of the FGD, can not result in any damagement to absorption equipments, So in this example cancel the bypass flue together with its dampers and the FGD inlet and outlet dampers, decrease the dampers and the excessive long flue of FGD, further decrease the pressure loss of flue gas (the total of pressure loss is above 500Pa of 600MW power plant), raise the kinetic pressure of flue gas as a great deal of air getting into the spraying zone in the same time, so that decrease the power of BUF(the rising pressure of BUF is about 1800 Pa when it running at full burden in the usual FGD without GGH), can collocate the BUF with the power about 2500 kW, the absorption tower run as also a passage flue(a bypass flue habitually be set in a project of desulfurization to obtain a safety for power plant), do not bring any threat to the power plant, really safely running without hiding accidents.

When the present invention is applied to the equipments with higher temperature of exhaust gas such as sinter machine etc., or in order to control the water equilibrium of technics system, can make a simple one or two layers demister with stainless steel plate or aluminum plate, the section shape is ◇style or others which must be advantageous to get rid of the dirtiness and mist, suitably increase the clearance then control the pressure loss below 30 Pa(can not exceed this value even if running over a long period), such cheaper and simpler demister can be made at construction site, easily to be machininged, without hiding disaster of fire while constructing , easily to flush and replace, although the effect of demisting isn't so well, but not affect the function of cancelling the BUF and running absorption tower as bypass flue.

set spraying layers to top:

In this example even if the absorption tower is installed the simple demister(under the outlet of flue gas in the countercurrent zone) all the spraying layers can be fixed on the top of inside tower and above outlet of pure flue to increase the utility absorbing travel .the metal demister can get rid of dirtiness and water fog efficiently, the water fog and dirtiness are already less and the spraying slurry appeared high PH value above the demister, herein the metal demister have the function of the filler tower and the separate plate tower, so that can raise the desulfurization efficiency and lower Ca/S, particularly in countercurrent zone can lower the pressure loss of flue gas.

When fix without a metal demister, in order to control the vapour amount, can set technics supplement water on the top of empty tower which is also set to lower temperature and to purify spraying slurry: lower the film temperature of spraying slurry, catch the Limestone grains brought by flue gas, the purifying water with higher PH value back to tower participate in absorption and neutralization. Supplement water spraying should prevent from atomization, and the drops should be as little as possible, so can reach the best effect of catching dirtiness.

**Upper cube and nether cylinder tower:**

The velocity of flue gas usually be designed at 3-4 m/s in the usual absorption tower, actually because of the short-road effect the flue gas within the center of spraying zone can reach to 5-7 m/s(for 600 MW power plant, for instance, the ratio of sulphur Contained in coal is 2.4, the diameter of tower is 16m, the width of outlet and inlet of the flue are 8m, the ratio of short-road section to tower section is 0.6),so if the spraying square tower(or quasi-square tower) only be cut off the turbulence flue gas zone but do not change its diameter, the flue gas velocity can not be raised significantly and not bring more water fog. In the background technique relatively the more flow of slurry circulation and the less concentration of $CaCO_3$ that made the absorption ratio of gas film (the absorption quantity by gas film within one area) wandering but not rising, the more large value of L/G only make the circulation pump and the blower wasting power, make the fog and dirtiness going about, make the pressure loss of flue gas enlarging.

As figure 1 showing, the tower is only a flue gas duct, the fluent shape eradicates entirely the turbulence zone of two side which have more resistance for flue gas, efficiently utilize the space inside the tower, lower the cost of construction. because the depressing from the spraying slurry the flue gas spread along the longer axis after getting into spray zone, assist with the more sucking power from negative pressure of stack, form a long upwards flue gas flow naturally, the tower body with square section just be made for the shape of this flow field, mostly decrease the pressure loss of flue gas inside square tower, the limitation by width has a function of commutating for flue gas, the outlet of spraying zone has the same width with tower body, the front is lower than the back (or same at height), the flue gas occurre whirlpool at the Cape wherein lower the resistance for flue gas (the cape of tower can be designed as streamline shape), therefore the spraying zone have no turbulence and detained flow and reflux in large area. Within the spraying zone, the uniformity distribution of flue gas, the steady flow field, the short travel and the speedy flue gas flow, wherein significantly lower the speed of spray slurry in the end of spraying travel, significantly ease the erosion of tower wall, can basically eradicate the leak of tower wall.

Primary design for project:

This example velocity of flue gas is designed as 5-6 m/s, for 600 MW power plant with 2,700,000 m3/h of flue gas flow, the section of square tower is about 130 m , can design the length along flow direction as 13m and the width as 9m for the section of square tower(the flowing section is equal to the section of fans adding the section of square, such design of section can benefit the steady of structure), the longer along with flue gas flow direction that will be benefit for the uniformity of flue gas flow field, the mezzo width eased the join of the raw flue and pure flue. Then the diameter of cylinder is about 16m, the overall height of the cylindrical tower is 7m that comprise 5m height of slurry and 2m height of transition zone of oxidizing air tubes which in the absorption oxidizing zone, the inlet of flue gas was set as 9m×4m, it was larger than the section of raw flue, are shrunk to fit the raw flue at a certain reduction ratio, herein it is used as transition zone of flue gas flow field and benefit the uniformity flow field. Above the inlet of flue gas is the spraying travel which is about 5-6m. The alternations between the spraying layers is 1.5m (raise the height of the lowest layer as high as possible), set 4 spraying layers (the circulation flow are increased 1/3-1/2 at least than the usual tower), the overall height of the spraying layers is 4.5m. The width of outlet bottom of pure flue is set as 9m, the height is about 4.5m, such as figure 1 showing, the section is square or trapezia, the slope of tower top and its two sides shrunk to the pure flue then stack at a certain reduction ratio, the overall height of the tower is about 25m.
Practice and theory proved: raising the velocity of flue gas can raise the efficiency of desulfurization, this example can consider to raise the velocity of flue gas again, at the same time increase the circulation flow to increase the amount of slurry film properly, increase the touching area of gas against slurry, depress the increment of the gypsum steam because the increasing of velocity of flue gas, so ensure running without dirtiness.

**Nude tower:**

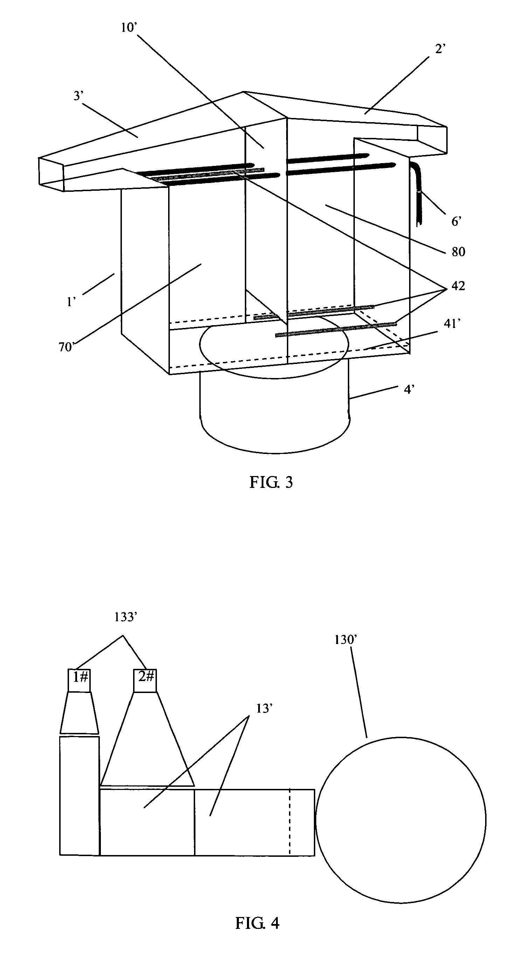

Such as figure 3-4 showing, just is another example for the present invention of the wet flue gas desulfurization absorption tower for power plant, the difference from above example lie in: said the outlet of pure flue gas and the inlet of raw flue gas separately located on the top of two side of the square tower 1 oppositely, both are the same width as the square tower 1 with the section of square or trapezia, the pure gas outlet flue 2 and the raw gas inlet flue 3 are separately shrunk to the pure flue and the raw flue at a certain reduction ratio, inside the square tower 1 two spraying zones are equally divided by a plate 10, they are downstream power oxidizing zone 70 and countercurrent power oxidizing zone 80, through the symmetry structure of tower with the asymmetry distribution of air and slurry overcome the pressure loss of flue gas inside tower.
Raise the slurry surface of the slurry pond to approach the square tower, the height from the nether edge of the plate to slurry surface is 6m and that form the channel of flue gas. The nether cylindrical tower can be set as square tower with the same diameter as that of upper square tower, and can adopt others shape which must benefit for desulfurization, for the 600MW power plant, refer to the example mentioned above, considering the occupied site and the utilizing of the nether space, the diameter of nether cylindrical tower is set as 13m, the height is 5m, the overall height of the slurry pond is 6.5m, for this special shape of slurry pond can set a certain direction spraying zone to mix fully.
In this example the downstream spraying travel adding the countercurrent spraying travel is a complete absorption travel, it is a division in space time for absorption travel and technics process, so the total time of absorption increase one times, the designed amount of flue gas flow and the circulation flow of slurry are as same as above example, the area of total section of the tower body is 9m×26m, in this example(naked tower) the shapes and sizes of the flue inlet and flue outlet are just as same as that of pure flue outlet said above, the oxidizing air tubes 42 in the 70 zone are alternately distributed with circulation ducts, all the nozzles open mouths downwards. The oxidizing air tubes 42 in the 80 zone are above slurry surface 41 about 1-2m, the nozzles and the methods of draining are such as the example above, the overall height is about 25m.
The spraying slurry and oxidizing air are divided two parts: in the downstream power oxidizing zone 70 are distributed about 2/3 of total air and about 2/3 of total spraying slurry, the inlet of flue gas locates at the upside of this zone side; in the countercurrent power oxidizing zone 80 are distributed about 1/3 of total air and 1/3 of total spraying slurry, the outlet of flue gas locates at the upside of this zone side. Herein the pressure loss of the flue gas can break through 0, even if fix the simple metal demister (with little loss of pressure) can also cancel the BUF.
The figure 4 is a plan of this example, the shape of the FGD (nude tower) 13 is similar to the flue, vacant inside empty outside, integrate the bypass flue and the desulfurization set into one, in practice it is a desulfurization flue, like a flue can be laid between the draught fan 133 and the stack 130. The concept of desulfurization are significantly generalized, the technics of desulfurization are significantly advanced. With the real conditions of constructing site properly adjust the inlet and outlet even the tower body but must make the flue gas flow field as uniformity as possible.

The running principle of the naked tower:

Without the resistance of gas, supposing the primary speed of spraying slurry is 0m/s, with the effect of gravity acceleration(9.8 m/s$^2$) the travel time is about 1 second, the velocity of the end travel is about 9.8 m/s, when reach the travel position of 1.2 meters away from its spraying layer with the travel time of 0.5s, the speed of slurry is as same as that of flue gas, in order to make it more obviousness that the driving effect of spraying slurry, the primary speed of the spraying zone 70 should exceed the speed of flue gas, that of 80 zone should be as slow as possible. In the downstream power oxidizing zone, comparing with flue gas, the faster speed and the more of mass and density will transfer more kinetic energy to increase the kinetic pressure of flue gas ($E = 0.5 mv^2$), most increase the velocity of flue gas in the end of travel, but because of the restriction of flue gas flow and transfer principle etc., in practice the kinetic pressure of flue gas can not be increased significantly. According to the law of air pressure $PV = nRT$, the volume(speed of flue gas)is being a inverse ratio with static pressure(supposing the temperature is steady in the period), that is to say when the speed of flue gas increase one times, the static pressure will lower half, generally the inside tower is running with negative pressure, namely the absolute pressure is less than the atmosphere pressure, the experience impress indicate that is impossible the flue gas speed namely the negative pressure even the flue gas flow was greatly increased because of the spraying, the transferring principle of spraying slurry to flue gas is frictional transfer, wind after tiger, similar to the running principle of the jet pump(but the efficiency of the jet pump isn't high, relatively need much more velocity of gas or liquid and much more flux to obtain a certain negative pressure), although can create a certain amount of slurry film to increase the transfer, the film is too soft to transfer so can not turn around the situation of lower efficiency. But in theory the piston or screw air compressor can transfer all the outside force to static pressure (in practice there exists all kinds of efficiency), so can supply a high pressure air, the transfer principle is closed compressing, according with the law of closed air pressure, the transfer force has no factor. Because the flue gas flow (volume) is mastered by the draught fan and the supply fan with large power in the flue gas system, as the transfer principle of slurry to gas the much more of velocity difference are only frictional to heat. So it isn't smart to design much more difference of velocity to increase the pressure of flue gas, the static and kinetic pressure can't be increased significantly, the estimate value is less than 1% (the total mechanical energy of static pressure adding kinetic pressure), the increment of pressure of the flue gas is about 1000 Pa, the design of the flue gas velocity should aim the efficiency of desulfurization, secondly aim the land occupied and the cost of construction. But the pressure of flue gas has been increased after all, the relative opened flue gas system (not closed), the "jet pump" in the downstream zone increase the kinetic pressure of flue gas (make the flue gas pressure increasing), at the same time will increase the flow of flue gas (in the running condition of no change of each damper in the whole flue gas system), namely increase the total mechanical energy of flue gas, although the increment is more less than the draught fan or the supply fan which with huge power.

The oxidizing air join the primary position of spraying travel within the 70 zone and 80 zone(the primary speed of air should more than that of flue gas), herein will bring a certain static and kinetic pressure into the flue gas, the principle isn't same as that of spraying slurry, it will entirely mix into the flue gas, at this condition the total mechanical energy (about the static and kinetic pressure of gas mass) is conservation, because there almost has no consumption of noneffective power such as fricative heat etc. and the loss of mass, so the transfer efficiency is more high. But the amount of oxidizing air is very little than the flue gas, generally the amount of oxidizing air is lower than 20000m$^2$/s, it is useless even the air amount of centrifugal fans are increased several times, and the pressure head of centrifugal fan is little, but has been made a progress after all, the efficiency of all are more than one, so this zone is designed as "jet pump" named power oxidizing zone.

For the countercurrent oxidizing zone, the spraying slurry also can't bring more increment of velocity of flue gas and more loss of gas pressure because of the transfer principle of friction and slurry film, but the increment of velocity difference of gas against slurry, enhance the degree of fractionizing and conflicting, increase the amount of film, increase the transfer of kinetic energy at a certain degree, at the same condition the value of pressure loss is much more than that of pressure rising in the downstream zone, in order to supplement the pressure loss, in this example design the asymmetry distribution of gas and slurry with 1/2 in two sides and the symmetry structures, supplement the loss of pressure, realize the 0 breakthrough of pressure loss inside the tower.

Following-against naked tower- our priority:

The flue gas channel under the plate wherein the velocity of flue gas is higher, the slurry spattered from slurry pond take the function of the liquid column tower for the diving flue gas, the flue gas still contains about 1/3 of SO$_2$ at this place, properly increase the PH value of slurry in slurry pond, can increase the amount of absorption, so the desulfurization efficiency of following-against style(and downstream style) naked tower is a little higher than that of countercurrent style(and against-following style) naked tower in the same running condition, at the same time ,the acid fog and sulfite and dirtiness will be further eradicated. And in the countercurrent naked tower and the following-against naked tower the flue gas will be flushed by the higher PH slurry near the outlet, so the acid fog and sulfite and dirtiness brought are less than that of downstream style and against-following style naked tower. In order to optimize the performance of running without dirtiness in the following-against naked tower, can make the limestone concentration of spraying slurry in 80 zone a bit more than that in 70 zone, at the same time send a great deal of excess air into countercurrent power oxidizing zone. On said above, the following-against naked tower integrate many advantage into itself such as high efficiency of desulfurization, the 0 pressure loss of flue gas, the pure flue gas without dirtiness and acid fog, etc., it is more suitable to cancel the demister, it's our priority.

Others project for naked tower:

1] This example can also be designed as against-following style, aim the principle at ensuring the pressure loss of flue gas approaching 0.

2] For ensuring "0 breakthrough', within this naked tower can appropriately enlarge the ratio of spraying slurry(and oxidizing air) which in the downstream spraying zone to which in the countercurrent spraying zone; appropriately reduce the velocity of flue gas which getting into the countercurrent spraying zone and which within it.

3] For ensuring the safety of power plant and lowering the cost of construction, the naked tower can be designed only with downstream power oxidizing zone namely the downstream style naked tower.

4] In the special situation can be designed as countercurrent naked tower. For overcoming the pressure loss caused by the spraying slurry, can increase the amount of cheaper oxidizing air; appropriately decrease the flux and primary speed of spraying slurry, don't fix demister, lower the flue gas velocity at the inlet and within the tower, with the increasing and saving of static pressure and the lowering of kinetic pressure to overcome the resistance of flue gas, can consider the velocity of flue gas as 1-2m/s even more lower, the contact time of gas against slurry is about 2s-3s, so that the pressure loss is little then cancel the BUF. The practice that the liquid column tower and the spraying tower additionally fix salver proved: with lower flue gas velocity and the longer time of contact can also obtain a higher efficiency of desulfurization.

**desulfurization stack:**

Can easily integrate various example of the present invention into one body style desulfurization stack, named "taye No. One", intelligent inside and beautiful outside, only a pole alone in the word.

1] In the project of desulfurization stack, the integration of countercurrent naked tower into the stack is most simple and temptatious. In order to overall the pressure loss, can increase the cheaper oxidizing air, enlarge the inner-diameter of the stack, and the simplest flue, therein provide the possibility of realizing the project. For the public stack (the absorption is public) of two or more boilers, must respectively fix the dampers at the inlet of tower, otherwise a part of flue gas may get into the stopped boiler flue while another is running because the press of the spraying slurry, those flue gas arte with higher acidity, a great deal of sulfite and dirtiness. Or integrate two flues into one before the flue gas get into the tower then can not fix any dampers.
2] The project of integrating downstream tower into stack has the most characteristic of drive. Can divide the bottom of the stack into three parts, at the two side construct the downstream towers of two boilers, the middle part used as the public flue up to directly outlet of the stack. Can also integrate several raw flue gas flues into one then get into the downstream absorption tower, herein the nether stack are divided two part: one downstream tower and another outlet flue.
3] For the integration of against-following tower, the flues are complex and occupy more land, and many performance of this style tower are lower than that of the following-against tower, we do not suggest this kind of combination.
4] The following-against tower, excellent, the project of integrating it into stack should be the best, only separately fix a damper at the inlet of raw flue gas in the front method of the integration project mentioned above, and change the middle flue into countercurrent spraying zone, wherein can protect the stopped boiler flue against the opposite flue gas getting in; the best project is that integrate several raw flues into one then get into in order downstream zone, countercurrent zone and outlet of stack, not need any dampers.

Explanation for the project:

All of said various examples are the application of this invention about technics and structures, the detail technology mentioned can consult each other.

**The analysis and control for system response:**

In this invention the absorption slurry and the oxidizing air directly get into to spraying zone and its advantage chemical processes is separated from the slurry pond. Greatly raise the response time of controlled variables such as desulfurization efficiency etc. Has an excellent character of control with instant following, entirely resolve the delay of system response, the step response time is about 2s-3s (the time of slurry circulating), improve significantly the controllable and steady performance of technics system, and avoid various adverse results such as excessively regulating.

Response analysis for the normal spraying tower technics system:

In the usual spraying tower the ratio of calcium to sulphur are set as 1.02~1.06 or so, and set it as a feedforward of control system, but in practice the control system is indeed abandoned because the response of desulfurization efficiency is seriously behind the variety of limestone supplying slurry.

The amount of absorbed $SO_2$ decided by the acidity of slurry, the PH value of absorption limitation is between 4 and 6, the PH value of slurry is regulated by the flow of limestone absorption slurry, because the reaction of absorbing carry on within the spraying travel, so the acidity namely the concentration of $CaCO_3$ of spraying slurry and circulation flow decide the absorption amount, mastering the concentration of $CaCO_3$ namely mastering the efficiency of desulfurization, but the limestone flux join into the slurry pond do not equal to that of circulation flow, exist the bottleneck effect. This is the cause in usual absorption tower that the delay response, the regulating with excess and the feedforward being abandoned,

In the usual wet-FGD the limestone slurry get into the slurry pond to be agitated then get through circulating pump and form spraying slurry, the power of agitator decide the uniformity degree of mixing, then decide the unexpected waving degree of system, the more agitating power is small the more mixing time up to uniformity is long, at the same time will cause the random of delay and waving, result in confusion even that can't regulate at all, the more time is short the more system is steady and the more control is easy, but the more needed power is large. Neglecting other factors, the absorption amount Q of $SO_2$ is the function of average flow U in a certain time $\tau$, Q=f(U, $\tau$), but not the function of instant flow V, the average value U is a function of supplying slurry V and $\tau$. Because of the existence of slurry pond volume, the limestone flow of circulation flow can't alter instantly following that of limestone supplying slurry flow, this system bottleneck decide the characteristic of system response time $\xi$, the more volume is small the more characteristic of instantly following is good, the more ability of peak-regulating is high, otherwise the more delay is serious, more difficult to master. As the time of slurry circulation and absorption are relatively very short, so the system responds time is decided by $\tau$ and $\xi$, but they occur at the same time, then the system responds time is decided by the longer time of delay, but the interference is added each other, so make system more and more hard to control.

The desulfurization efficiency $\eta$ is the ratio of the absorption amount Q for $SO_2$ to the content amount of sulphur G of flue gas flow: $\eta$ =Q/ G. Therefore, the desulfurization efficiency is decided by the degree of Q approaching G, in the ideal condition with the ideal desulfurization efficiency the $CaCO_3$ flow in the spraying slurry is almost equal to the needed flow based on burden, with the condition that the burden is steady for a long term and the supplying opposite the needing of limestone keep a dynamic equilibrium in the slurry pond, that is the $CaCO_3$ flow in the supplying limestone slurry flow. At this time suppose the value of $\tau$ is enough small, 600 MW power plant run with 80% desulfurization burden, generally the volume of slurry pond is about 2000 $m^3$, the circulation flow don't over 1500 $m^3$/h, the limestone supplying slurry flow is about 24 $m^3$/h(the consumption of limestone is 6~8 t/h, the concentration $\delta$ of supplying slurry is 30%, the density $\rho$ is 1.2 g/$cm^3$), then the limestone concentration $\delta$ of the spraying slurry must be kept at about 0.48%(the density of slurry pond generally be maintained at 1.08 g/$cm^3$) herein can keep the limestone flow of spraying slurry at 6~8 t/h, to ensure the expected desulfurization efficiency, in the running period the supplying limestone is used to raise the limestone concentration of the spraying slurry back to slurry pond (be regarded as 0), thereby reach a dynamic equilibrium with the output in the circulation, this 0.48% decide the PH value of slurry pond and single value corresponding each other. Supposing appear a step interference of full burden at this time and keep a enough long-term, the limestone consumption need to increase to 8~10 t/h, then have to raise the limestone concentration $\delta$ of slurry pond to 0.6% (circulation pump is running with full burden in this period, if the circulation flow decrease, the limestone concentration need to correspondingly raise and the PH value correspondingly rise to reach the limestone flow needed by absorption), namely the limestone concentration $\delta$ need to raise about 0.12%, and need to be supplied additionally about 2.6T limestone, namely in the period of reaching a new dynamic equilibrium after the step interference need to add 7.3 $m^3$ of limestone supplying slurry to raise the limestone concentration of slurry pond. At this time whose concentration need to be raised are not only the spraying slurry back to slurry pond but also mainly the slurry of slurry pond, this is decisive factor to the bottleneck phenomenon of system delay response.

If supply 30m$^3$/h of absorption slurry in advance according to the control system with feedforward of Ca/S, the effective flow for raising the concentration of slurry pond is 6 m$^3$/h (supposing the limestone within the circulation flow entirely be utilized to absorption), even if raise the concentration with this flow all the way, also have to waste about 1 hour to reach a new dynamic equilibrium.

Because of the bottleneck of the limestone equivalent of supplying slurry opposite that of circulation slurry, the limestone equivalent of circulation slurry can't be raised instantly, the effective flow is reducing gradually while the concentration rising gradually:

The real time needed:

$$\xi = p\int d\delta/v\,(t)|\,(\delta 0, \delta');$$

$d\delta$ : instant concentration, is the function of excess limestone needed instantly;

V(t) : the effective flow, the difference of equivalent flow between instant supplying and instant needing;

$\delta^0$ : the CaCO$_3$ concentration before interfering;

$\delta'$ : the CaCO$_3$ concentration after interfering;

p : factor;

The effective flow V(t) is an difference of equivalent flow between instant supplying and instant needing, Being decided by the increasing of concentration $\delta$; it is the single-value reducing function of concentration $\delta$, experience formula: V(t)= ke$^{-t}$. So the new dynamic equilibrium of supplying opposite needing must be realized with suddenly joining in, otherwise will be an infinite period.

But in the PID regulation with the feedforward of Ca/S and the feedback of $\eta$, the supplying slurry flow is also difficult to master because of the delay of bottleneck, additionally the wave of equivalent concentration of limestone within spraying slurry caused by agitating, the PH value of slurry is very easily exceeding and vibrating while regulating.

On the real running most reaction of the neutralization carry on in the slurry pond, the limestone concentration getting into circulation is lower than said concentration, but the effect of system delay is basically same, only the zone of neutralization reaction are changed, but the change of zone only change the time of absorption and neutralization. Thereby the ability of desulfurization is also lowered (the acidity is very high at the end of spraying travel), increase the probability and degree of corrosion.

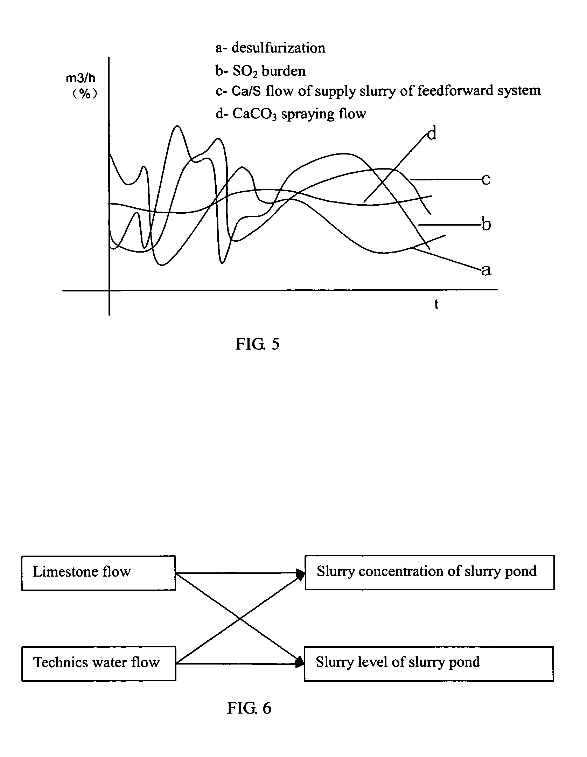

Such as figure 5 showing, on real running have no way to make the value of $\tau$ enough small, the matters such as the delay caused by bottleneck $\xi$ etc. become more complex and serious, the asymmetry mixture cause that the desulfurization efficiency appear unexpected waving and various side-effect. The value of $\tau$ can but be made as small as possible: Enhance the ability of agitation and supplying slurry meeting an emergency to reduce the time of system response. At the same time the more slurry pond is small the more value of $\xi$ is small, the more limestone concentration alters quickly, the more system responds quickly. But that do not benefit the dissolving of limestone, the concentration of ions and particles are large and the activity of ions and particles are low so that do not benefit the reaction of oxidizing and neutralizing of sulfite, then affect absorption; the detaining time of slurry is short (avoid too large of concentration) so that affect the crystallizing of gypsum.

In the actual running the burden of desulfurization can not be maintained steadily for a long period, will alter considerably within several seconds to more than 10 seconds because of the altering of coal and power attempering, particularly be short of coal for power plant in this time, the coal source is various, the coal quality is various, the burden of power attempering are frequent and considerable, result in the flue gas flow and the content of sulphur wave considerably, at this time the steady period T of desulfurization burden is far small than the values of $\xi$ and $\tau$, but the limestone equivalent flow of spraying is only a gentle curve. Although assist with the controlling of PH value, but the PH value is decided by $\delta$, and that the $\delta$ will be affected by the burden of desulfurization and circulation flow, and be restricted by the effect of bottleneck, the control system of usual absorption tower can not follow instantly with the rapidly waving of desulfurization burden, cause that the $\delta$ wave unexpectedly, result in a great deal of SO$_2$ leaking to atmosphere at any possible chance, at the same time on the equipments of slurry pond and demister etc. wherein unavoidably cause depositing, crystallizing, knocking as dirtiness by CaCO$_3$ and gypsum and sulfite, or the higher of acidity. The deposited calcium, various salt and sub-salt bring many disbenefit that is same as disease, frequently cause the lower of desulfurization efficiency and the higher of PH value etc.. All kinds of disbenefit have been depressed the rising of desulfurization efficiency, hindered the construction of comfortable earth, suppressed the development of environmental protection enterprise of desulfurization.

The optimized control project for the technics system of usual spraying tower:

On said above, the complement amount of limestone absorption slurry needed by slurry pond which is calculated in real time herein it is set as the feedforward differential signal D, the concentration $\delta$ is set as feedback (but the $\delta$ is hard to measure, should set the $\eta$ as feedback, and the PH value as surveillance but not as feedback), can get a control effect that is more steady and ideal, the characters of instantly following and waving will be improved considerably. For the frequent waving burden the differential factor should be more small to fit its waving. At the same time should improve the ability of meeting an emergency of limestone supplying slurry duct.

The analysis and control strategy for the technics system response of empty and naked tower:

The best characteristic of system responding is indeed to abandoning the concept of slurry pond, entirely remove the system bottleneck, the absorption slurry(or more majority) directly join circulating duct, utilize the circulating pump to agitate at a same time, realize the "0" breakthrough of system response time of $\xi$ and $\tau$ (only the delay of circulation travel with absorption reaction), namely the technics and structures of the present invention, thereby the control strategy has been achieved, only a single loop PID to regulate and output the signal of the supplying slurry flow with the feedback of desulfurization efficiency $\eta$, do not with feedforward , that's easy. This excellent, all others FGD can not be comparable.

**The solution to control strategy with coupling parameters within the technics system of preparing system of limestone slurry:**

technics introduction :

In this invention the structures and technics firstly choose the mill slurry pond to replace the mill slurry tank, cancel the slurry reclaimed pond and it's submersible pump for sediment and slurry, agitator, instrument and valve and its pipe. the depth of slurry pond is 2.1 meters, can lower the foundation of mill, the hydroclone, and the dehydrating gypsum system (general fixed above the mill, this project can be lowered to 10 meters layer, is higher than that which vacuum can absorb), and the height of workshop at the same time; the preparing limestone slurry system adopt the wet ball mill, the size of limestone grains is about 350 mesh (to fulfil the need of naked tower). The top flow pressure of limestone hydroclone usually need to maintain at 150 kPa or so to ensure the qualified slurry (lower the pressure in this project), in the running condition of design when running normally the sediment slurry circulation pump for the mill slurry pond whose output power is a certain value (needn't transducer pump), so can not fix regulating valve in the preparing slurry technics system, but a throttle orifice instead, only need to regulate the pressure of top flow of hydroclone to a suitable value. The products of slurry can output intermittently or continuously. The bottom slurry of hydroclone reflows to the inlet of mill and the slurry pond.

as figure 6 showing, the coupling relationship between controlled variables and interfering variables which existing in the technics system of the mill, generally adopt the method of the control with mill slurry tank level and the control with the velocity of feeding material, but do not solve the coupling relationship, the variables interfere each other, the controlled variable are hard to control, in practice the habitual lose of control result in leaking, overflow, almost only manual-control, this example solved the coupling relationship of various parameters through separately control within each subsection that the variable value was divided into, then the controlled variables become clear and simple, both density and level of slurry pond can be easily controlled with their give value.

The analysis and control for the coupling relationship of parameters:

The interfering variables: the stop and Start of the hydroclone output, namely the change of density and reflowing flux at the mill inlet and slurry pond; the change of density and level of slurry pond cause by starting, stop, maintaining, reclaiming the leaking and clearing; the altering of ball inside the mill.

The controlled variables: the slurry density of slurry pond (general density is 1.4 g/cm$^3$); the slurry level of slurry pond (general level is 1.6m~1.9m).

The Controlling variables: the limestone flow, the technics water flow.

The Output variables: The product of limestone slurry.

The technics of wet mill demand holding a certain ratio of the technics water flow of mill inlet to limestone flow, general is 1: 3, therefore, lock the ratio in the control system, can only regulate anyone of that. The intermittent output can cause more greatly interfering, in that period the back flow of mill inlet and slurry pond will wave more greatly, because the volume flow of limestone adding technics water of the mill inlet are relatively smaller than that of technics water and back flow of slurry pond, but its density is greater and make a little level change of mill slurry pond, therefore regulate the slurry density of mill slurry pond with the limestone flow of mill inlet; regulate the slurry level of mill slurry pond with its technics water. This technics water needs enough amount of excess to rapidly regulate an emergency. Usually the slurry level of slurry pond is about 2 meters, set a safe range such as 1.6 meters-2.0 meters, when the slurry level exceeds this safe range automatically run the level PID regulator, in a short time makes the slurry level of slurry pond back to normal level (can be 1.8 meters), after a certain steady period cut off the level regulator automatically, maintain the technics water flow of mill slurry pond not to change. In the process of preparing slurry keep the density regulator running all the way to maintain the slurry density of slurry pond. For the great interfering of level, the level regulator control the slurry level back to normal level within short time then exit, the continuous running of density regulator ensured the limestone supplying and its quality. The starting and stopping for an emergency of the level regulator that cut off the coupling relationship with density, make the complex coupling relationship simple and clear, become a simple quasi-single loop regulator, make the strategy clearly, the target singly, the operation simply, the quality of product obtain the credible guarantee. This project get more ability of adaptation, whenever starting, stopping or in running period the slurry pond do not have the possibility of overflow or burning pump as leaking of water, safety and be credible..

**This invention has the following benefit:**

On said above, the present invention provide a wet desulfurization nude tower or empty tower for power plant, the simple fluent shape of the spraying zone with its inlet flue and outlet flue, additionally cancel the demister, eradicate entirely the turbulence and bias flow even reflux of the flue gas. Cancel the roots blower, optimize the method of supplying slurry, Oxidation air and absorption slurry are directly fed into spray zone, running without dirtiness, the pure flue gas passage need no corrosion protection, the bypass flue together with its dampers and the FGD inlet and outlet dampers all that are canceled, so the power of BUF can be reduced more than about 50%. Through change the countercurrent spraying to following-against current spraying overcome the pressure loss of flue gas so the BUF is canceled. The absorption tower is also a bypass flue by covered with a layer of antiseptic material which can bear higher temperature inside tower, reduce the volume of slurry pond together with its agitation power considerably, can lower the absorption tower height to about 25m, raise the desulfurization efficiently (99%) and the ratio of product to power, said that almost reach their extreme limitation, reduce the value of Ca/S, enhance the tower ability of resisting wind and quake, reduce the construction cost to about 10%, the power consumption ratio of power plant can be reduced about 1.25%, save power energy about 30,000,000 kw/h and about 10,000 tons coal one year; the desulfurization stack (GDS) further reduce the cost of construction. at the same time bring forward the control strategy with instantly following for the background technics, as well as the simplest Control strategy only with single loop PID for this invention; it ensure the implement of this invention to draw out the control strategy for coupling variable of preparing limestone slurry.
Said above, others promised by law may draw out modifications and variations according to the structures and technics and principles of this invention, therefore that the appended claims are intended to cover such modifications and variations which are within the true scope and spirit of this invention.

**Claims**

1.  A kind of technics and structures of the wet flue gas desulfurization absorption tower for power plant, its characters lie in, above a certain height that above the slurry pond surface is the square tower, the section is square or quasi-square, below the square tower that is cylindrical tower or other shape body which must benefit this technics performance, the raw flue and the pure flue join the square tower after be dilated at a certain ratio with the interface width same to that of square tower. A great deal of air is sent into the spraying zone of absorption tower that goes along with the flue gas, less or no air is sent into the slurry pond. The limestone absorption slurry separately get into the slurry circulation ducts and the slurry pond or entirely get into the slurry circulation ducts, the desulfurization reaction accomplish instantly. Especially in condition of single oxidizing zone can realize the pure flue gas is alkalescence, without dirtiness such as acid mist and sulfite, so the usual demister is canceled. For reducing the consumption of water should fix the simple metal demister, additionally the excess oxidation air oxidize after, the pure flue gas passage needs no corrosion protection, the absorption tower is also a bypass flue by covered with a layer of antiseptic material which can bear higher temperature inside tower, thereby the bypass flue together with its dampers and the FGD inlet and outlet dampers all can be canceled, can lower the power of BUF or cancel it. In a higher temperature environment, the equipments such as the flue and the absorption tower should adopt the particular methods of heat dissipating to improve the performance of FGD.

2.  According to claim 1 said technics and structures of the wet flue gas desulfurization absorption tower for power plant, wherein its characters lie in, form multiple oxidizing zones: the absorption oxidizing zone namely the spray zone and the slurry pond oxidizing zone, for countercurrent absorption tower or countercurrent spraying zone, the oxidation air tubes of the absorption oxidation zone locate under the flue gas inlet and above the slurry pond surface; for the downstream tower or downstream spraying zone, the oxidation air tubes of the absorption oxidation zone are arranged alternately with the chief spraying ducts. The Spraying zone can be fed into a great deal of air with centrifugal fans, or utilize the negative pressure inside the tower to suck in natural wind without any fans. The oxidation air tubes of slurry pond locate at the upper slurry pond and below the slurry surface, distribute less of oxidization air, and reduce a majority of Roots blowers' power. When it is very large that the flow of air fed into the absorption oxidizing zone form the single oxidation zone, cancel the slurry pond oxidation zone.

3. According to claim 2 said technics and structures of the wet flue gas desulfurization absorption tower for power plant, wherein its characters lie in, Within the countercurrent spray zone, the nozzles which open outlet upwards locate on the top of the oxidation air tubes, above the nozzle fix a pair of cones 422, the diameters of its bottoms are large than the inside diameter of nozzles, outside the nether oxidation air tubes connect some drain valves or some drain pipes which insert into slurry a certain depth.

4. According to claim 1 said technics and structures of the wet flue gas desulfurization absorption tower for power plant, wherein its characters lie in, divide said supplying $CaCO_3$ slurry pipe into several branches then join the slurry pond, and each branch inlet is nearer to the inlet of matched chief circulation duct, each flow of $CaCO_3$ supplying slurry branch matches each flow of chief circulation duct; or make the branches which join the slurry pond and join each chief circulation duct independently each other, and control each branch independently; Or only design the branches which join each chief circulation duct. Limestone absorption slurry should be predissolved; Increase the slurry circulation flow than that of the background technology; All the spraying layers can be installed on the top of inside tower even if the simple metal demister is already installed; Show and control the PH value of limestone spraying slurry and slurry of slurry pond with particular project; Reduce the volume and agitating power of slurry pond considerably.

5. According to claim 1 said technics and structures of the wet flue gas desulfurization absorption tower for power plant, wherein its characters lie in, the chemical reaction of absorbing and neutralizing and oxidizing accomplish instantly, the flue gas velocity inside tower can be designed about 5-6m/s even higher, the contact time of gas against slurry can be designed as about 1 second, can lower the height of absorption tower considerably because of the technics and structures of the present invention.

6. According to claim 1 said technics and structures of the wet flue gas desulfurization absorption tower for power plant, wherein its characters lie in, Inside the following-against tower or the against-following tower, form the downstream power oxidation zone (70) and the countercurrent power oxidation zone (80), the distributed flow of oxidation air and spraying slurry which into the 70 zone are more than which into the 80 zone and maintained at a same ratio, and should make the initial velocity of spraying slurry in 70 zone faster than the flue gas velocity in the tower and also faster than the initial velocity of spraying slurry in 80 zone; Only form the downstream power oxidation zone Inside the downstream tower, not fixing the usual demister can realize the 0 breakthrough of pressure loss inside the tower, so cancel the BUF. In order to optimize the performance of the tower running without dirtiness, should send additional excess oxidation air into 80 zone and raise the spraying slurry PH value of this zone.

7. According to claim 1 said technics and structures of the wet flue gas desulfurization absorption tower for power plant, wherein its characters lie in, for downstream Absorption tower, or the countercurrent absorption tower in a particular condition such as integrating with stack, and adopt the methods of reducing flue gas velocity, reducing the spraying flow, the BUF can be canceled.

8. According to claim 1 said technics and structures of the wet flue gas desulfurization absorption tower for power plant, wherein its characters lie in, this technics system resolve the response delay such as supplying slurry bottleneck, accomplish desulfurization reaction instantly. Realize the "0" breakthrough of the system response, bring forward the simplest single loop PID control strategy; bring forward a optimized control strategy for the background technology technics through analyzing the response delay such as supplying slurry bottleneck of the background technology technics.

9. According to claim 1 said technics and structures of the wet flue gas desulfurization absorption tower for power plant, wherein its characters lie in, through analyzing the parameters of optimized preparing slurry system with wet ball mill for resolving said coupling relationship, bring forward a solution of quasi-single loop PID control strategy for the preparing slurry technics system with the clear relationship of parameters. So that can benefit the implementation of said examples of this invention.

10. According to claim 1 said technics and structures of the wet flue gas desulfurization absorption tower for power plant, wherein its characters lie in, said each example of this invention can be simply integrated with stack into the one style desulfurization stack.

11. According to each claim 1-10 said technics and structures of the wet flue gas desulfurization absorption tower for power plant, wherein its characters lie in, this technics and structures and control strategies or the detail of them can be applied to others such as the wet-FGD technics of the filler tower, the liquid column tower, the bubbling tower, can also be applied to the wet-FGD with other absorbent such as the double alkali method, the ammonia method, the sodium alkali method and the sea water method, the magnesia method.

FIG. 1

FIG. 2

FIG. 3

FIG. 4

a- desulfurization

b- SO$_2$ burden

c- Ca/S flow of supply slurry of feedforward system

d- CaCO$_3$ spraying flow

FIG. 5

FIG. 6

<table>
<tr><td colspan="2"><b>INTERNATIONAL SEARCH REPORT</b></td><td>International application No.<br>PCT/CN2011/000650</td></tr>
</table>

| **A. CLASSIFICATION OF SUBJECT MATTER** |
|---|
| See extra sheet<br>According to International Patent Classification (IPC) or to both national classification and IPC |

| **B. FIELDS SEARCHED** |
|---|
| Minimum documentation searched (classification system followed by classification symbols)<br><br>IPC: B01D |
| Documentation searched other than minimum documentation to the extent that such documents are included in the fields searched<br><br> |
| Electronic data base consulted during the international search (name of data base and, where practicable, search terms used)<br><br>CPRS, CNKI, WPI, EPODOC: SO2, FGD, desulfuration, sulfur dioxide, wet, slurry, tower, column, square, rectangular, round, cylindrical, flue, oxidation, spray |

**C. DOCUMENTS CONSIDERED TO BE RELEVANT**

| Category* | Citation of document, with indication, where appropriate, of the relevant passages | Relevant to claim No. |
|---|---|---|
| P, X | CN101816888A (SUN, Houjie) 01 Sep. 2010(01.09.2010) paragraphs [0017]-[0027], [0038]-[0126] in the description, figures 1-3 | 1-11 |
| P, X | SUN, Houjie. The Nude Tower of FGD Technology. Boiler Manufacturing. Jan. 2011, No. 1, pages 51-54 | 1-2,4-6,8,11 |
| P, X | SUN, Houjie. Technology Development of FGD Nude Tower. China Electric Power Education. Jan. 2011, No. 3, pages 151-153 | 1-2,4-8,10-11 |
| P, Y | CN201632192U (SHANGHAI RONGXIN NEW ENERGY ENVIRONMENTAL SCIENCE & TECHNOLOGY CO LTD et al.) 17 Nov. 2010(17.11.2010) paragraphs [0013]-[0020] in the description, figure 2 | 1,11 |
| Y | CN101066519A (CHINA POWER INVESTMENT CORP YUANDA ENVIRONMENTAL PROTECTION et al.) 07 Nov. 2007(07.11.2007) claim 1, figure 2 | 1,11 |
| A | JP2000176233A (BABCOCK-HITACHI KK) 27 Jun. 2000(27.06.2000) the whole document | 1-11 |

| ☐ Further documents are listed in the continuation of Box C. | ☒ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim (S) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>21 Jun. 2011(21.06.2011) | Date of mailing of the international search report<br>**21 Jul. 2011 (21.07.2011)** |
|---|---|
| Name and mailing address of the ISA/CN<br>The State Intellectual Property Office, the P.R.China<br>6 Xitucheng Rd., Jimen Bridge, Haidian District, Beijing, China 100088<br>Facsimile No. 86-10-62019451 | Authorized officer<br>**WAN Junjie**<br>Telephone No. (86-10)62085023 |

Form PCT/ISA /210 (second sheet) (July 2009)

## INTERNATIONAL SEARCH REPORT
### Information on patent family members

International application No.

PCT/CN2011/000650

| Patent Documents referred in the Report | Publication Date | Patent Family | Publication Date |
|---|---|---|---|
| CN101816888A | 01.09.2010 | CN102078765A | 01.06.2011 |
| CN201632192U | 17.11.2010 | none | |
| CN101066519A | 07.11.2007 | CN100493679C | 03.06.2009 |
| JP2000176233A | 27.06.2000 | JP4014063B2 | 28.11.2007 |

Form PCT/ISA /210 (patent family annex) (July 2009)

## INTERNATIONAL SEARCH REPORT

International application No.

PCT/CN2011/000650

CONTINUATION OF A. CLASSIFICATION OF SUBJECT MATTER

B01D 53/50 (2006.01) i
B01D 53/80 (2006.01) i

Form PCT/ISA /210 (extra sheet) (July 2009)